(19) Europäisches Patentamt
European Patent Office
Office européen des brevets

(11) Veröffentlichungsnummer: **0 296 543**
**A2**

(12) # EUROPÄISCHE PATENTANMELDUNG

(21) Anmeldenummer: **88109885.9**

(22) Anmeldetag: **22.06.88**

(51) Int. Cl.[4]: **C09F 1/04 , B01F 17/52 , //C09D17/00,C09B41/00**

Patentanspruch für folgenden Vertragsstaat: ES.

(30) Priorität: **25.06.87 DE 3720982**

(43) Veröffentlichungstag der Anmeldung: **28.12.88 Patentblatt 88/52**

(84) Benannte Vertragsstaaten: **BE CH DE ES FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Uhrig, Heinz**
**Feldbergstrasse 59**
**D-6374 Steinbach/Taunus(DE)**
Erfinder: **Schwerin, Siegfried, Dr.**
**Frankfurter Strasse 33**
**D-6238 Hofheim am Taunus(DE)**
Erfinder: **Deubel, Reinhold, Dr.**
**Geierfeld 64**
**D-6232 Bad Soden am Taunus(DE)**

(54) **Stickstoffhaltige Kondensationsprodukte auf Basis unmodifizierter oder modifizierter Naturharze, Verfahren zu ihrer Herstellung und ihre Verwendung.**

(57) Die Erfindung betrifft grenzflächenaktive Mittel der allgemeinen Formel

$A-[(X-O)_n-Y-Z]_m$

in der A für einen Rest eines unmodifizierten oder modifizierten natürlichen Harzes oder dessen Veresterungsprudukts mit einem mehrwertigen Alkohol steht, X für 1,2-Ethylen oder -Propylen, Y wie X definiert ist oder für $-CH_2CHOHCH_2-$, Z für OH oder (Ia)

$(-NH-Q)_a-NR-(Q-NH-)_bH$ (Ia)

in der R H oder $C_1$-$C_{24}$-Alkyl oder $(-CH_2CH_2O)_p-H$, worin p 1-100 ist, oder $(-Q-NH)_c-H$, Q $C_1$-$C_{24}$-Alkylen, das durch Sauerstoffatome unterbrochen sein kann, a 0-5 und c 0-5 bedeuten,
wobei mindestens ein Z von OH verschieden ist,
n für 0 bis 150 und
m für 1 bis 5 steht.

Die Verbindungen werden erhalten indem man Harze oder deren Veresterungsprodukte mit mehrwertigen Alkoholen oxalkyliert und nach Umwandlung von Hydroxygruppen in geeignete Abgangsgruppen mit Aminen der Formel Z-H umsetzt. Die Produkte eignen sich vor allem als Kupplungshilfsmittel, Dispergiermittel und Präparationsmittel für Farbmittel.

EP 0 296 543 A2

## Stickstoffhaltige Kondensationsprodukte auf Basis unmodifizierter oder modifizierter Naturharze, Verfahren zu ihrer Herstellung und ihre Verwendung

Die Erfindung betrifft das Gebiet grenzflächenaktiver Mittel. Gegenstand der Erfindung sind Verbindungen der allgemeinen Formel (1)

$A\text{-}[(X\text{-}O)_n\text{-}Y\text{-}Z]_m$ (I)

in der A für einen Rest eines unmodifizierten oder modifizierten natürlichen Harzes oder dessen Veresterungsprodukts mit einem mehrwertigen Alkohol steht, X für eine Gruppe der Formel $-CH_2CH_2-$, $-CH_2CH(CH_3)-$ oder $-CH(CH_3)-CH_2-$, Y für eine Gruppe der Formel $-CH_2CH_2-$, $-CH_2(CH(CH_3)-$, $-CH(CH_3)-CH_2-$ oder $-CH_2CH(OH)-CH_2-$, Z für einen Rest der Formel -OH oder der Formel (Ia)

$$(\text{-NH-Q})_a\text{-}\underset{}{\overset{R}{\overset{|}{N}}}\text{-}(\text{Q-NH-})_b\text{H} \qquad (Ia)$$

in der R ein Wasserstoffatom, einen Alkylrest mit 1-24 C-Atomen, vorzugsweise 1-18 C-Atomen, einen Rest der Formel $(-CH_2CH_2O)_p-H$, worin p eine ganze Zahl von 1 bis 100, vorzugsweise von 1 bis 20, insbesondere 1 ist, oder einen Rest der Formel $(-Q-NH)_c-H$, Q eine geradkettige oder verzweigte Alkylengruppe mit 1 bis 24, vorzugsweise 2 bis 20, insbesondere 2 bis 4 C-Atomen, die auch durch ein oder mehrere nicht direkt nebeneinander stehende Sauerstoffatome unterbrochen sein kann, a eine ganze Zahl von 0 bis 5, vorzugsweise 0 bis 3, insbesondere 1 oder 2, b eine ganze Zahl von 0 bis 5, vorzugsweise von 0 bis 3, insbesondere 0, und c eine ganze Zahl von 0 bis 5, vorzugsweise 0 oder 1, insbesondere 0 bedeutet,

wobei mindestens ein Rest Z von -OH verschieden ist, n für eine ganze Zahl von 0 bis 150, vorzugsweise 5 bis 30 und m für eine ganze Zahl von 1 bis 5, vorzugsweise 2 oder 3 steht, wobei für den Fall das in Formel (I) und Formel (Ia) mehrere Gruppen oder Reste X, Y, Z, R oder Q enthalten sind, die jeweiligen Gruppen oder Reste gleiche oder verschiedene Bedeutung haben können.

Von besonderem Interesse sind Verbindungen der allgemeinen Forme (I), in der A ein Rest einer natürlichen Harzsäure, einer hydrierten oder disproportionierten Harzsäure, eines Harzamins oder Harzalkohols oder einer mit Aryl- oder Alkylarylgruppen modifizierten Harzsäure oder eines Veresterungsprodukt, das durch Veresterung eines der vorstehenden Harzsäuren mit einem 2 bis 6-wertigen Alkohol unter Beibehaltung von freien Hydroxygruppen erhalten wird, bedeutet.

Von besonderem Interesse sind die Verbindungen der allgemeinen Formel (I), in der X die Gruppe der Formel $-CH_2CH_2-$ und Y die Gruppe der Formel $-CH_2CH_2-$ oder $-CH_2CH(OH)-CH_2-$ bedeutet.

Von besonderem Interesse sind die Verbindungen der allgemeinen Formel (I), bei denen in der Formel (Ia) R ein Wasserstoffatom, Q eine geradkettige Alkylengruppe mit 2 bis 20 C-Atomen, insbesondere 1,2-Ethylen oder 1,3-Propylen, a eine ganze Zahl von 1 bis 5 und b die Zahl 0 bedeutet.

Von Interesse sind auch Verbindungen der allgemeinen Formel (I), bei denen in Formel (Ia) R eine geradkettige Alkylgruppe mit 1 bis 18 C-atomen oder eine Gruppe der Formel $-CH_2CH_2OH$, Q eine 1,2-Ethylen- oder 1,3-Propylengruppe, a eine ganze Zahl von 0 bis 5, vorzugsweise 0, 1 oder 2 und b die Zahl 0 bedeutet.

Weiterhin von Interesse sind Verbindungen der allgemeinen Formel (I), bei denen in Formel (Ia) R ein Wasserstoffatom, Q eine 2-Methyl-propylen-(1,3)-Gruppe, a eine ganze Zahl von 1 bis 5 und b die Zahl 0 bedeutet.

Die erfindungsgemäßen Verbindungen werden beispielsweise erhalten, indem man natürliche Harzsäuren, disproportionierte oder hydrierte Harzsäuren, Harzalkohole, Harzamine oder Harzsäuren, die durch Reaktion mit aromatischen Hydroxyverbindungen (Phenolen) oder mit halogenabspaltenden Cycloalkyl- und insbesondere Aralkyl- und Arylverbindungen modifiziert sind, und/oder Veresterungsprodukten der genannten Harzsäuren mit mehrwertigen Alkoholen mit Ethylenoxid oder Propylenoxid oder beiden Epoxiden hintereinander oder einem Gemisch beider Epoxide oxalkyliert, anschließend die erhaltenen Oxalkylate zur Überführung in reaktionsfähigere Verbindungen an den endständigen Hydroxygruppen beispielsweise mit Epichlorhydrin oder mit Thionylchlorid reagieren läßt und anschließend die erhaltenen Halogenverbindungen mit Aminen der Formel Z-H umsetzt, wobei Z die für Formel (Ia) definierte Bedeutung hat.

Folgende Harzverbindungen eignen sich beispielsweise zur Herstellung der erfindungsgemäßen Verbindungen:

a) natürliche Harzsäuren und/oder ihre Hydrierungs- oder Disproportionierungsprodukte, wobei die genannten Harzverbindungen vorzugsweise in Form der handelsüblichen Kolophoniumarten vorliegen oder daraus gewonnen werden,

b) Harzamine, wie sie aus den unter a) genannten Harzsäuren durch Umwandlung zum Harzsäurenitril und anschließender Hydrierung erhalten werden,

c) Harzalkohole, wie sie aus den unter a) genannten Harzsäuren durch Reduktion, insbesondere Hydrierung, entstehen,

d) modifizierte Harzsäuren, wie sie durch Addition oder Kondensation mit aromatischen Hydroxyverbindungen oder mit halogenabspaltenden aromatischen Zwischenprodukten aus den unter a) genannten Harzsäuren gewonnen werden,

e) Veresterungsprodukte, wie man sie durch Veresterung einer Harzsäure oder einer modifizierten Harzsäure, wie sie unter a) und d) genannt werden mit einem 2- bis 6-wertigen Alkohol erhält, wobei im Veresterungsprodukt noch freie Hydroxygruppen vorhanden sein müssen.

Als Ausgangsprodukte eignen sich vorzugsweise natürliche Harzsäuren, wie Abietinsäure, Dehydroabietinsäure, Dihydroabietinsäure, Tetrahydroabietinsäure, Laevopimarsäure, Dextropimarsäure und Isodextropimarsäure, wie sie in handelsüblichen Kolophoniumarten vorliegen. Weiterhin eignen sich vorzugsweise disproportionierte, hydrierte und dimerisierte Harzsäuren, Harzalkohole, wie Abietylalkohol und Hydroabietylalkohol, wobei auch das handelsübliche Gemisch aus Dehydroabietyl-, Dihydroabietyl-und Tetrahydroabietylalkohol (technischer Hydroabietylalkohol) geeignet ist, sowie Harzamine, die von den obengenannten Harzsäuren abgeleitet sind, insbesondere Dehydroabietylamin.

Weiterhin eignen sich als Ausgangsstoffe Harz-Phenol-Verbindungen, wie sie durch Addition von Phenolen wie Hydroxybenzol, o-, m- und p-Kresol, Orthokresolacetat, Salicylsäure, Guajacol, Bisphenol A, α-Naphthol und β-Naphthol an natürliche Harzsäuren oder handelsübliche Kolophoniumarten in Gegenwart von stark sauren oder säureabspaltenden Katalysatoren, wie z. B. Bortrifluorid, Chlorwasserstoff, Zinntetrachlorid, Aluminiumtrichlorid oder Mineralsäuren bei einer Temperatur von vorzugsweise 20 bis 120 °C in einem organischen Medium oder in Gegenwart eines stark sauren Ionenaustauschers bei vorzugsweise 120 bis 200 °C, insbesondere bei 150 bis 170 °C, gewonnen werden, wobei auf ein Mol Harzsäure 0,5 bis 0,8, vorzugsweise 0,65 bis 0,75 Mol der genannten Phenole eingesetzt werden.

Weiterhin eignen sich modifizierte Naturharzsäuren, wie sie durch Umsetzung von Naturharzsäuren mit halogenabspaltenden, araliphatischen oder aromatischen Verbindungen, z. B. Benzylchlorid, o-, m- und p-Bis- (chlormethyl)-benzol, 2-, 3- und 4-Chlormethyl-toluol, Benzalchorid, 1- und 2-Chlormethyl-naphthalin, 2-, 3- und 4-Chlor-phenol, 5-Chlor-2-hydroxytoluol, 2-Chlor-5-hydroxy-1,3-xylol, 4-Chlordiphenyl, 1- und 2-Chlornaphthalin, 1-Chlor-2-naphthol und 2-Chlor-1-naphthol, oder mit cycloaliphatischen Verbindungen, wie Cyclohexylchlorid, in Gegenwart eines Katalysators, wie z. B. Zinkchlorid in einer Menge von vorzugsweise 0,05 bis 1, insbesondere 0,1 bis 0,5 Gew.-%, bei einer Temperatur zwischen 100 bis 220 °C, vorzugsweise 150 bis 210 °C, erhalten werden, wobei auf 1 Mol Harzsäure 0,5 bis 1,0, vorzugsweise 0,7 bis 0,8 Mol der genannten Chlorkohlenwasserstoffe umgesetzt werden. Als Vertreter der mehrwertigen Alkohole zur Veresterung der Harzsäuren bei der Herstellung der unter e) genannten Harzverbindungen sind beispielsweise geeignet:
1,2-Ethandiol, 1,2-Propandiol, 1,2- und 1,4-Butandiol, 1,2,4-Butantriol, 1,1,1,-Trimethylolpropan, Glycerin, Pentaerythrit, Dipentaerythrit, Trimethylolethan, Neopentylglykol, 2,4-Dihydroxy-3-methylol-pentan, 1,2,6-Hexantriol, Sorbit, Anhydrosorbit, Hexit und Mannit, vorzugsweise Glycerin. Die Veresterung der Harzsäuren mit den mehrwertigen Alkoholen erfolgt in einem Molverhältnis, so daß das Veresterungsprodukt noch freie Hydroxygruppen aufweist. Vorzugsweise wird das Molverhältnis 1:1 von Harzsäure zu mehrwertigem Alkohol verwendet. Die Veresterungsreaktion kann nach üblichen Verfahren bei etwa 100 bis 300 °C, vorzugsweise bei 160 bis 270 °C, gegebenenfalls unter Zusatz eines Schleppmittels, beispielsweise eines aromatischen Kohlenwasserstoffs oder Chlorkohlenwasserstoffs, gegebenenfalls unter Zusatz eines Katalysators, wie Benzolsulfonsäure, p-Toluolsulfonsäure, Borsäure, Schwefelsäure, Salzsäure und Zinnpulver, durchgeführt werden. Die Oxalkylierung der natürlichen und modifizierten Harzsäuren, Harzalkohle, Harzamine und Harzsäureester, von denen sich der Harzrest A in der allgemeinen Formel (I) ableitet, kann nach üblichen Methoden erfolgen. Vorzugsweise wird der jeweilige Harzkörper bei einer Tempertur von 100 bis 200 °C, vorzugsweise bei 120 bis 160 °C mit Ethylenoxid oder Propylenoxid oder beiden Epoxiden (abwechselnd oder als Gemisch) in Gegenwart eines Hydroxids oder eines Alkoxylats als Katalysator, vorzugsweise eines Alkalihydroxids, wie Kaliumhydroxid oder insbesondere Natriumhydroxid, oder eines Alkalialkoxylats, wie Natriummethylat oder Natriumethylat, umgesetzt. Die Menge an Ethylenoxid und/ oder Propylenoxid wird so bemessen, daß pro reaktionsfähiges Wasserstoffatom der freien Carboxygruppen, Hydroxygruppen bzw. Aminogruppen des jeweiligen Harzkörpers 1 bis 150, vorzugsweise 2 bis 20 Mol Ethylenoxid und/oder Propylenoxid angelagert werden. Die Konzentration des Katalysators Alkalihydroxid

oder Alkalialkoxylat soll bevorzugt 0,05 bis 1,0 Gew.-% bezogen auf den Harzkörper, bei Beginn der Oxalkylierung sein. Die Oxalkylierung kann drucklos oder in Druckgefäßen mit Propylenoxid oder bevorzugt Ethylenoxid oder Mischungen von beiden Epoxiden durchgeführt werden, wobei das Alkylenoxid gasförmig oder flüssig zugeführt werden kann. Der Arbeitsdruck beträgt in der Regel 1 bis 10, vorzugsweise 2 bis 8 bar. Die Menge des angelagerten Alkylenoxids kann je nach dem beabsichtigten Einsatzzweck und dem angestrebte Grad der Hydrophilie der aus den Oxethylierungsprodukten hergestellten Aminkondensate der Formel (I) variert und optimiert werden.

Die erhaltenen Oxalkylierungsprodukte können in der Regel nicht direkt mit den Aminen der Formel Z-H umgesetzt werden. Daher werden an einem Teil oder an allen endständigen Hydroxygruppen reaktionsfähige Gruppen, vorzugsweise Chloratome oder Chloralkylgruppen in die Oxalkylierungsprodukte eingeführt. Dies erfolgt beispielsweise durch Anlagerung von Epichlorhydrin an die endständigen Hydroxygruppen nach an sich üblichen Verfahren bei einer Temperatur von 20 bis 100° C, vorzugsweise von 40 bis 90° C, in Gegenwart eines Katalysators wie Zinntetrachlorid, vorzugsweise von 0,1 bis 2 % Zinntetrachlorid, bezogen auf das Gewicht des Oxethylats. Auch ein direkter Austausch der endständigen Hydroxygruppen gegen Chloratome ist möglich, beispielsweise durch Reaktion der Oxalkylierungsprodukte mit Halogenierungsmitteln wie Thionylchlorid bei einer Temperatur von 40 bis 100° C, vorzugsweise von 40 bis 80° C. Die reaktionsfähig gemachten Oxalkylierungsprodukte können dann mit den Aminen der Formel Z-H, zweckmäßig bei einer Temperatur von 20 bis 130° C, vorzugsweise bei 40 bis 90° C, insbesondere bei 70 bis 90° C, umgesetzt werden.

Beispiele für Amine der Formel Z-H, wobei Z die genannte Formel (Ia) bedeutet, sind beispielsweise Alkylendiamine und Polyamine der Formel $H(-NH-Q)_a-NH_2$, wobei a und Q die bei Formel (Ia) genannte Bedeutung haben. Derartige Verbindungen sind beispielsweise 1,2-Diaminoethan, 1,3-Diaminopropan, 1,2-Diaminopropan, 1,4-Diaminobutan, 1,5-Diaminopentan, 1,6-Diaminohexan, 1,7-Diaminoheptan, 1,8-Diaminooctan, 1,9-Diaminononan, 1,10-Diaminodecan, 1,12-Diaminododecan, Diethylentriamin, Dipropylentriamin, Triethylentetramin, Dipropylentetramin, Tetraethylenpentamin, Tetrapropylenpentamin, Pentaethylenhexamin, Pentapropylenhexamin, Pentapropylenhexamin, Hexaethylenheptamin, Hexapropylenheptamin, Heptaethylenoctamin, Heptapropylenoctamin, 1,3-Diamino-2,2-dimethyl-propan, 1,2-Diamino-2-methyl-propan, 1,3-Diamino-2-methyl-propan, 2,5-Diamino-2,5-dimethylhexan, N-(2-aminoethyl)-1,3-propylendiamin, N,N′-bis-(3-aminopropyl)-ethylendiamin, 1,12-diamino-4,9-dioxadodecan, 1,13-Diamino-4,7,10-trioxatridecan, Bis-(3-aminopropyl)-polytetrahydrofurane und 1,10-Diamino-4,7-dioxadecan, vorzugweise 1,2-Diaminoethan und 1,3-Diaminopropan. Auch Ammoniak, die einfachste stickstoffhaltige Verbindung der vorstehenden Formel, ist geeignet.

Weiterhin sind Amine der Formel $H(-NH-Q)_a-NHCHCH_2OH$ geeignet, beispielsweise Alkylolamine, wie N-(2-Hydroxyethyl)-1,2-diaminoethan, N-(2-Hydroxyethyl)-diethylentriamin, N-(2-Hydroxyethyl)-triethylentetramin und 2-Amino-ethanol.

Weitere geeignete Amine haben die Formel $H(-NH-Q)_aNR-(Q-NH)_b-H$, wobei a, b, Q und R die bei der Formel (Ia) genannte Bedeutung haben und R von Wasserstoff verschieden ist. Derartige Amine sind beispielsweise Fettamine wie Methylamin, Ethylamin, Propylamin, Butylamin, Pentylamin, Hexylamin, Heptylamin, Octylamin, Decylamin, Undecylamin, Dodecylamin, Tridecylamin, Tetradecylamin, Pentadecylamin, Hexadecylamin, Heptadecylamin, Octadecylamin, Nonadecylamin, Eicosylamin, Heneicosylamin, Docosylamin, Tricosylamin, Tetracosylamin sowie Gemische der Fettamine, insbesondere die technischen Fettamine, wie Cocosfettamin, Oleylamin, Stearylamin und Talgfettamin. Außerdem sind Polyamine der vorstehend genannten Formel geeignet, beispielsweise N-methyl-ethylendiamin, N-methyl-propylendiamin, N-ethylethylendiamin, Talgfettpropylendiamin, Cocosfettpropylendiamin, N-Stearyl-1,3-diaminopropan, N-Stearyl-N-(3-aminopropyl)-1,3-diaminopropan, N-(3-Stearylamino-propyl)-1,3-diaminopropan, N-Talgfett-N-(3-aminopropyl)-1,3-diaminopropan, N-(3-Talgfettamin-propyl)-1,3-diaminopropan, N-Oleyl-N-(3-aminopropyl)-1,3-diaminopropan und Bis-(3-aminopropyl)-methylamin. Weiterhin sind geeignet Amine mit 3 Aminoalkylengruppen oder Polyaminoalkylengruppen an einem Stickstoffatom, beispielsweise N,N-Bis-(3-aminopropyl)-propylendiamin.

Die obengenannten Amine oder Gemische dieser Amine werden unter Abspaltung von Salzsäure mit den oxalkylierten Harzkörpern, die reaktive Chloratome besitzen, umgesetzt, wobei nach der Umsetzung vorzugsweise ein pH-Wert von 7,0 bis 8,0 (gemessen nach Verdünnen mit Wasser in 1 % Lösung oder Emulsion) erreicht wird.

Die erfindungsgemäßen Verbindungen und ihre Gemische sind in Wasser emulgierbar bis klar löslich und zeigen nach dem Ross-Miles-Test (DIN 53902) nur eine geringe Schaumneigung bei gleichzeitiger Herabsetzung der Oberflächenspannung nach der Ringabrießmethode (DIN 53914) bis zu etwa 39 x $10^{-3}$ N/m. Die erfindungsgemäßen Verbindungen besitzen eine gute Netzkraft; so wird Baumwollgewebe nach der Tauchnetzmethode (DIN 53901) bei 70° C in der Regel in einer Zeit von weniger als 1 Minute benetzt.

Gegenstand der Erfindung ist auch die Verwendung der erfindungsgemäßen Verbindung als grenzflächenaktive Mittel. Die erfindungsgemäßen Substanzen besitzen aufgrund ihrer vielseitigen oberflächenaktiven Eigenschafte ein breites Anwendungsspektrum. Vorteilhaft ist der Einsatz als Kuppelhilfsmittel bei der Herstellung von Azofarbmitteln, insbesondere von Azopigmenten, sowie als Hilfsmittel zur Feinverteilung und Stabilisierung von Farbmitteln und Feststoffen und ferner als Netzmittel und Egalisiermittel. Die Hilfsmittel sind gut als Dispergier- und Präparationsmittel für die Herstellung gut fließfähiger Pigmentpräparationen geeignet. Darüberhinaus sind die erfindungsgemäßen Kondensationsprodukte als Retentions- und Flockungsmittel verwendbar.

Die erfindungsgemäßen Verbindungen können einzeln oder als Gemische sowie in Kombination mit anderen nichtionogenen und/oder kationaktiven Tensiden eingesetzt werden. Weiterhin können sie zusammen mit Gerüstsubstanzen oder anderen üblichen Zusätzen oder Hilfsstoffen zur Anwendung kommen.

In den folgenden Beispielen beziehen sich "Teile" auf das Gewicht.

**Herstellungsbeispiel 1:**

a) Herstellung des Harzsäureoxethylates:

302 Teile Kolophonium werden nach Zugabe von 2,2 Teilen Natriummethylat in einem Druckgefäß unter Rühren und Zuführen von 440 Teilen Ethylenoxid bei 150 bis 160 °C unter Aufrechterhaltung eines Druckes von 4 bis 6 bar oxalkyliert. Wenn das ganze Ethylenoxid aufgedrückt ist, wird eine Stunde bei 150 bis 160 °C nachgerührt. Das erhaltene Harzsäureaddukt enthält im Mittel 10 Ethylenoxy-Einheiten pro Molekül.

b) Herstellung des Harzaminkondensats:

500 Teile Harzsäureoxethylat a) werden nach Anheizen auf 50 °C mit 2,5 Teilen Zinntetrachlorid vesetzt und unter Ansteigen der Innentemperatur auf 70 bis 80 °C innerhalb von 30 bis 45 Minuten tropfenweise mit 62 Teilen Epichlorhydrin versetzt. Anschließend wird unter Überlagerung von Stickstoff 4 Stunden bei 80 bis 85 °C nachgerührt. Danach werden bei gleicher Temperatur 50 Teile 1,3-Propandiamin innerhalb von etwa 30 Minuten eingetragen und für weitere 6 Stunden bei 80 °C bis 90 °C und einem pH-Wert von 7,0 bis 8,0 gerührt, wobei das gebildete Salzsäuregas mit Hilfe von Stickstoffgas entfernt wird. Das erhaltene Aminkondensat ist braunfarbig, von wachsartiger Konsistenz und besitzt eine Aminzahl von 128. (Die Aminzahl nach DIN/ISO 3771 gibt die Menge an Kaliumhydroxyd in Milligramm an, die einem Gramm des Aminkondensats bei der Neutralisation mit Perchlorsäure entspricht).

**Herstellungsbeispiel 2:**

a) Herstellung des Harzalkoholoxalkylates:

288 Teile technischer Hydroabietylalkohol (Firma Hercules, USA) werden nach Zugabe von 1 Teil Kaliumhydroxid in einem Druckgefäß unter Rühren und Zuführen von 528 Teilen Ethylenoxyd bei 150 bis 160 °C unter Aufrechterhaltung eines Druckes von etwa 1,5 bis 2 bar oxalkyliert. Wenn des ganze Ethylenoxid aufgedrückt ist, wird eine Stunde bei 150 bis 160 °C nachgerührt. Das erhaltene Harzalkoholaddukt enthalt im Mitttel 12 Ethylenoxy-Einheiten pro Molekül.

b) Herstellung des Harzaminkondensates:

500 Teile Harzalkoholoxethylat a) werden entsprechend Verbindung 1b) nach Zugabe 2,5 Teilen Zinntetrachlorid mit 56,6 Teilen technischem Epichlorhydrin umgesetzt und mit 53,4 Teilen Diethylentriamin bei 80 bis 85 °C unter Durchleiten von Stickstoff umgesetzt. Man erhält ein hellgelbes, wachsweiches Produkt mit einer Aminzahl von etwa 110.

**Herstellungsbeispiel 3:**

a) Herstellung des Harzsäureglycerinesters:

302 Teile Kolophonium werden in Gegenwart von 4 Teilen Zinnpulver mit 92 Teilen Glycerin in einem geeigneten Rührgefäß unter Abdestillieren des Reaktionswassers innerhalb von 8 bis 10 Stunden bei 230 bis 250 °C bei gleichzeitigem Durchleiten von Stickstoff bis zu einer Säurezahl (DIN 53183) von 20 verestert (die Säurezahl gibt die Menge Kaliumhydroxid in Milligramm an, die zur Neutralisation von 1 g des Reaktionsprodukts verbraucht wird).

b) Herstellung des Harzsäureglycerinesteroxalkylates:

356 Teile Harzsäureglycerinester nach a) werden nach Zugabe von 2,7 Teilen Natriummethylat in einem Druckgefäß unter Rühren und Zuführen von 440 Teilen Etyhlenoxid bei 150 bis 160° C unter Aufrechterhaltung eines Druckes von 2 bis 8 bar oxalkyliert. Wenn das ganze Ethylenoxid aufgedrückt ist, wird noch 1 Stunde bei 150 bis 160° C gerührt. Das erhaltene Harzsäureglycerinesteraddukt enthält im Mittel 10 Ethylenoxy-Einheiten pro Molekül.

c) Herstellung des Harzaminkondensats:

500 Teile Harzsäreglycerinesteraddukt aus b) werden nach Zugabe von 3 Teilen Zinntetrachlorid auf 50° C angeheizt und innerhalb von 60 Minuten mit 112,7 Teilen Epichlorhydrin tropfenweise versetzt. Während des Eintropfens wird die Innentemperatur auf 80 bis 90° C erhöht. Nach 4 Stunden Rühren unter Durchleiten von Stickstoffgas werden innerhalb von etwa 45 Minuten bei gleicher Temperatur 73,5 Teile 1,2-Diaminoethan zugetropft. Anschließend läßt man weitere 5 Stunden bis zu einem pH-Wert von 7 bis 8 unter Durchleiten von Stickstoffgas rühren. Es wird ein braunfarbiges Produkt von wachsartiger Konsistenz erhalten. Die Aminzahl des Produkts liegt zwischen 215 bis 220.

**Herstellungsbeispiel 4:**

a) Herstellung des oxethylierten Harzsäureglycerinesters:

339 Teile disproportioniertes Kolophonium werden entsprechend dem Herstellungsbeispiel 3a) mit 92 Teilen Glycerin verestert und gemäß Herstellungsbeispiel 3b) mit 792 Teilen Ethylenoxid oxalkyliert. Das erhaltene Harzsäureglycerinesteraddukt enthält 18 Ethylenoxy-Einheiten pro Molekül.

b) Herstellung des Harzaminkondensats:

500 Teile Harzäureglycerinesteraddukt a) werden nach Erwärmen auf 40° C mit 10 Teilen Aktivkohle versetzt und innerhalb von 40 Minuten mit 306 Teilen Thionylchlorid tropfenweise versetzt, wobei die Innentemperatur auf 80 bis 85° C gesteigert wird. Anschließend wird bei gleicher Tempertur noch 3 Stunden unter Durchleiten von Stickstoff gerührt. Anschließend wird das überschüssige Thionylchlorid abdestilliert und noch weitere 3 Stunden unter Durchleiten von Stickstoffgas gerührt. Nachdem die Aktivkohle entfernt worden ist, werden bei 80 bis 90° C 52 Teile 1,2-Diaminoethan eingetragen und für weitere 4 Stunden unter Durchleiten von Stickstoffgas bis zu einem pH-Wert von 7 bis 8 gerührt. Das erhaltene Aminkondensat ist braunfarbig und von wachsartiger Konsistenz. Es besitzt eine Aminzahl zwischen 160 bis 165.

**Herstellungsbeispiel 5:**

a) Herstellung des Harzsäurepentaerythritesters:

302 Teile Kolophonium werden in Gegenwart von 4,5 Teilen Borsäure mit 136 Teilen Pentaerythrit entsprechend Herstellungsbeispiel 3a) bis zur einer Säurezahl von 15 verestert.

b) Herstellung des Harzsäureesteroxethylates:

420 Teile Harzsäurepentaerythritester a) werden nach Zugabe von 3,1 Teilen Natriummethylat entsprechend dem Herstellungsbeispiel 3b) mit 660 Teilen Ethylenoxid umgesetzt. Das erhaltene Harzsäureesteraddukt enthält im Mittel 15 Ethylenoxy-Einheiten pro Molekül.

c) Herstellung des Harzaminkondensats:

500 Teile Harzsäurepentaerythritesteraddukt b) werden analog Herstellungsbeispiel 3c) nach Zugabe von 4 Teilen Zinntetrachlorid bei 50° C Innentemperatur mit 128 Teilen Epichlorhydrin versetzt und 6 Stunden unter Überleiten von Stickstoffgas bei 80° C bis 85° C gerührt. Danach werden 85 Teile 1,2-Diaminoethan zugegeben und wird für weitere 4 Stunden bei gleicher Temperatur unter Durchleiten von Stickstoffgas bis zu einem pH-Wert von 7,5 bis 8 gerührt. Man erhält eine hellgelbe wachsartige Aminverbindung mit einer Aminzahl von 245 bis 248.

**Herstellungsbeispiel 6;**

a) Herstellung der Harzsäure-Phenol-Verbindung:

302 Teile Kolophonium und 66 Teile Phenol werden nach Zugabe von 25 Teilen eines stark sauren Ionenaustauschers bei Überlagerung von Stickstoffgas 36 Stunden bei 160 bis 165° C unter Rückfluß erhitzt und gerührt. Anschließend wird das Produkt durch Ablassen durch das Bodenhahnsieb vom Ionenaustauscher getrennt. Die Harzäure-Phenol-Verbindung enthält noch 3,95 % freies Phenol.

b) Herstellung des Harz-Phenol-Oxethylats:

360 Teile des unter a) beschreibenen modifizierten Harzes werden nach Zugabe von 1,5 Teilen Natriumhydroxyd in einem Druckgefäß unter Rühren und Zuführen von 704 Teilen Ethylenoxid bei 150 bis 170°C unter Aufrechterhaltung eines Druckes zwischen 1,5 und 2,5 bar oxethyliert. Nachdem das ganze Ethylenoxid aufgedrückt ist, wird 1 Stunde bei 150 bis 160°C weitergerührt. Das erhaltene Harz-Oxalkylat enthält im Mittel 16 Ethylenoxy-Einheiten pro Molekül.

c) Herstellung des Harzaminkondensats:

500 Teile Harzphenol-Oxethylat aus b) werden entsprechend Herstellungsbeispiel 1b) in Gegenwart von 5 Teilen Zinntetrachlorid mit 88,2 Teilen Epichlorhydrin und anschließend mit 71,0 Teilen 1,3-Diaminopropan bei 75 bis 85°C umgesetzt. Das erhaltene hellbraune Aminkondensat von wachsfester Konsistenz besitzt eine Aminzahl von etwa 188.

**Herstellungsbeispiel 7:**

a) Herstellung der Harz-Kresol-Verbindung:

302 Teile Kolophonium werden entsprechend Herstellungsbeispiel 6a) mit 75 Teilen technischem m-Kresol bei 160 bis 165°C umgesetzt. Nach Abtrennen des Ionenaustauschers erhält man ein Produkt mit einer Sàurezahl von 120, das noch 3,7 % nicht umgesetztes Kresol enthält.

b) Herstellung des Harz-Kresol-Glycerinesters:

370 Teile Harz-Kresol-Verbindung aus a) werden in Gegenwart von 6 Teilen Zinnpulver mit 90 Teilen Glycerin entsprechend Herstellungsbeispiel 3a) unter Abdestillieren des Reaktionswassers innerhalb von 8 bis 10 Stunden bei 230 bis 250°C gleichzeitigem Durchleiten von Stickstoffgas bis zu einer Säurezahl von 10 verestert.

c) Herstellung des Oxethylates:

450 Teile Glycerinester aus b) werden analog Herstellungsbeispiel 6b) nach Zugabe von 33 Teilen Natiummethylat mit 792 Teilen Ethylenoxid oxethyliert. Das erhaltene Addukt enthält etwa 18 Ethylenoxy-Einheiten pro Molekül.

d) Herstellung des Harzaminkondensats:

500 Teile Oxethylat aus c) werden nach Zugabe von 4,0 Teilen Zinntetrachlorid analog Herstellungsbeispiel 3c) mit 75 Teilen Epichlorhydrin bei 80 bis 85°C umgesetzt und bei derselben Innentemperatur mit 50 Teilen 1,2-Diaminoethan kondensiert. Das hellbraune, pastenförmige Aminkondensat besitzt eine Aminzahl von 150 bis 152.

**Herstellungsbeispiel 8:**

a) Herstellung des Monoglycerinesters eines benzylierten Harzes:

302 Teile Kolophonium werden in 126,5 Teilen Benzylchlorid nach Zugabe von 0,4 Teilen Zinkchlorid unter Durchleiten von Stickstoff langsam auf 100°C erhitzt und 2 Stunden bei dieser Temperatur gehalten. Nach dieser Zeit läßt die Chlorwasserstoffentwicklung nach und die Temperatur wird auf 200°C erhöht und etwa 1 Stunde bie 200 bis 210°C gehalten, bis das Umsetzungsprodukt praktisch halogenfrei ist. Nach Abkühlen auf etwa 100°C und Zugabe von 92 Teilen Glycerin und 130 Xylol wird unter Rückfluß erhitzt und das Reaktionswasser durch azeotrope Destillation in einem Wasserabscheider gesammelt. Nach 4 Stunden ist die Umsetzung beendet und die flüchtigen Bestandteile werden durch Destillation unter reduziertem Druck oder mit Hilfe des Rotationsverdampfers entfernt. Als Rückstand enthält man ein helles Harz mit der Säurezahl 30 und einem Erweichungspunkt von 120 bis 125°C.

b) Herstellung des Oxethylats:

465 Teile des unter a) beschriebenen Glycerinesters werden nach Zugabe von 3,4 Teilen Natriummethylat und 660 Teilen Ethylenoxid oxethyliert. Das erhaltene dickflüssige Harzglycerinaddukt ist braun und enthält im Mittel 13,6 Ethylenoxy-Einheiten pro Molekül.

c) Herstellung des Aminkondensats:

500 g Oxethylat aus b) werden analog Herstellungsbeispiel 1a) mit 2,5 Teilen Zinntetrachlorid versetzt und bei 80 bis 85°C mit 85 Teilen Epichlorhydrin umgesetzt. Nach 3 Stunden Rühren werden 69 Teile 1,3-Diaminopropan zugegeben und bei gleicher temperatur umgesetzt, bis ein pH-Wert von 7,5 bis 8,0 erreicht wird. Das gelbbraune, wachsfeste Produkt besitzt eine Aminzahl von 162.

**Herstellungsbeispiel 9:**

a) Herstellung des Harzamin-Oxethylates:
287 Teile technisches Dehydroabietylamin (Amine D der Firma Hercules, USA) werden in einem Druckgefäß mit 4,5 Teilen Natriummethylat (30 %ig in Methanol) versetzt und nach Entfernen des überschüssigen Methanols durch Evakuierung mit Ethylenoxid bei 120 bis 140 °C unter Aufrechterhaltung eines Druckes zwischen 1,5 und 2,5 bar umgesetzt. Nachdem die gesamte Menge Ethylenoxid aufgedrückt ist, läßt man bei 130 bis 140 °C noch 1 Stunde lang rühren. Man erhält ein dickflüssiges, braunes Produkt, das im Mittel 10 Ethylenoxy-Einheiten pro Molekül enthält.

b) Herstellung des Harzaminkondensats:
500 Teile Oxethylat a) werden auf 50 °C Innentemperatur erwärmt und mit 3 Teilen Zinntetrachlorid versetzt. Unter Erhöhung der Temperatur auf 75 bis 80 °C läßt man innerhalb von 45 bis 60 Minuten unter Stickstoff-Atmosphäre 127 Teile Epichlorhydrin zutropfen und anschließend noch 4 Stunden bei 80 bis 85 °C rühren. Danach werden bei gleicher Temperatur 83 Teile 1,2-Diaminoethan innerhalb von 30 bis 45 Minuten zugegeben und wird weitere 4 Stunden bis zu einem pH-Wert von 7,5 bis 8,0 gerührt. Man erhält ein hellgelbes, wachsweiches Harzaminkondensat mit einer Aminzahl von 152.

**Herstellungsbeispiel 10:**

a) Herstellung des Harzamin-Oxethylats:
287 Teile technisches Dehydroabietylamin (Amine D der Firma Hercules, USA) werden analog Herstellungsbeispiel 9a) mit 440 Teilen Ethylenoxid oxethyliert. Anschließend werden bei 120 bis 140 °C und einem Druck von 2 bis 4 bar 112 Teile Propylenoxid zugeführt und eine weitere Stunde bei gleicher Temperatur gerührt. Man erhält ein dickflüssiges Harzamin-Oxethylat, das im Mittel 10 Ethylenoxy-Einheiten und 2 Propylenoxy-Einheiten pro Molekül enthält.

b) Herstellung des Aminkondensats:
500 Teile Oxalkylat a) werden analog Herstellungsbeispiel 4b) mit 306 Teilen Thionylchlorid umgesetzt. Anschließend werden bei 80 bis 90 °C 71,5 Teile 1,2-Diaminoethan innerhalb von 2 Stunden zugegeben. Nach 4 Stunden weiterem Rühren bei gleicher Innentemperatur erhält man ein gelbfarbiges, wachsweiches Aminkondensat mit einer Aminzahl zwischen 185 und 192.

**Herstellungsbeispiel II**

a) Herstellung des Harmazin-Oxethylats: 287 Teile technisches Dehydroabietylamin (Amine D der Firma Hercules, USA) werden entsprechend Herstellungsbeispiel 9a) nach Zugabe von 4,5 Teilen Natriummethylat mit 1320 Teilen Ethylenoxid umgesetzt. Man erhält ein hellgelbes, wachsartiges Harzaminaddukt, das im Mittel 30 Ethylenoxy-Einheiten pro Molekül enthält.

b) Herstellung des Aminokondensats:
500 Teile des Oxethylats a) werden mit 5 Teilen Zinntetrachlorid versetzt. Nach Erwärmen auf 50 °C werden unter Stickstoffgas-Atmosphäre innerhalb von 45 Minuten 58 Teile Epichlorhydrin zugetropft, wobei die Innentemperatur auf 70 bis 80 °C gesteigert wird. Nach 6 Stunden Rühren werden unter Erhöhung der Temperatur auf 80 bis 90 °C innerhalb von 1 bis 2 Stunden 97,5 Teile Talgfettamin und 23,2 Teile 1,3-Diaminopropan zugegeben. Nach weiteren 6 Stunden bei gleicher Temperatur, wobei ein pH-Wert von 8 erreicht wird, erhält man ein gelbes, wachsförmiges Aminkondensat mit einer Aminzahl zwischen 75 und 85.

**Herstellungsbeispiel 12:**

a) Herstellung des Harzsäure-Oxethylats:
302 Teile Kolophonium werden entsprechend Herstellungsbeispiel 1a) nach Zugabe von 0,5 Teilen pulverförmigem Ätznatron mit 1320 Teilen Ethylenoxid umgesetzt. Das Produkt enthält im Mittel 30 Ethylenoxy-Einheiten pro Molekül.

b) Herstellung des Aminkondensats:
500 Teile Oxethylat a) werden auf 50 °C Innentemperatur erwärmt und mit 2,5 Teilen Zinntetrachlorid versetzt. Dann läßt man unter Stickstoff-Atmosphäre und Erhöhung der Temperatur auf 70 bis 80 °C

innerhalb von 45 bis 60 Minuten 92,5 Teile Epichlorhydrin unter Rühren zutropfen. Nach 6 Stunden weiterem Rühren bei 75 bis 85°C wird das überschüssige Epichlorhydrin unter reduziertem Druck abdestilliert. Anschließend werden bei gleicher Temperatur 122 Teile N,N-Bis-(aminopropyl)-talgfettamin unter Rühren zugegeben. Anschließend läßt man noch 4 Stunden rühren, wobei ein pH-Wert von 7,5 bis 8 erreicht wird. Das erhaltene Aminkondensat besitzt eine Aminzahl zwischen 50 bis 60.

**Herstellungsbeispiel 13:**

a) Herstellung des Harzsäureglycerinesters:
339 Teile dispyroportioniertes Kolophonium werden entsprechend Herstelungsbeispiel 3a) in Gegenwart von 6 Teilen Zinnpulver mit 92 Teilen Glycerin bis zu einer Säurezahl von 2,5 verestert.

b) Herstellung des Harzsäureglycerinesteroxalkylates:
380 Teile Harzsäureglycerinester nach a) werden nach Zugabe von 3,5 Teilen Natriummethylat in einem Druckgefäß unter Rühren und Zuführen von 485,8 Teilen Ethylenoxid bei 150 bis 160°C unter Aufrechterhaltung eines Druckes von 2 bis 8 bar oxalkyliert. Nachdem alles Ethylenoxid aufgedrückt ist, wird noch 1 Stunde bei 150 bis 160°C gerührt. Das erhaltene Harzsäureglycerinesteraddukt enthält im Mittel 12 Ethylenoxy-Einheiten pro Molekül.

c) Herstellung des Harzaminkondensats:
380 Teile Harzsäureglycerinesteraddukt a) werden nach Erwärmen auf 40°C mit 15 Teilen Aktivhole versetzt und innerhalb von 40 Minuten mit 325 Teilen Thionylchlorid tropfenweise versetzt, wobei die Innentemperatur auf 80 bis 85°C gesteigert wird. Anschließend wird bei gleicher Temperatur noch 3 Stunden unter Durchleiten von Stickstoff gerührt. Anschließend wird das überschüssige Thionylchlorid abdestilliert und noch weitere 3 Stunden unter Durchleiten von Stickstoff gerührt. Nachdem die Aktivkohle entfernt worden ist, werden bei 80 bis 90°C 110,5 Teile 1,2-Diaminoethan eingetragen und für weitere 4 Stunden unter Durchleiten von Stickstoffgas bis zu einem pH-Wert von 7 bis 8 gerührt. Das erhaltene Aminkondensat ist braunfarbig und von wachsartiger Konsistenz. Es besitzt eine Aminzahl zwischen 190 bis 197.

**Herstellungsbeispiel 14:**

a) Herstellung der Harzsäure-Phenol-Verbindung:
302 Teile Kolophonium und 66 Teile Phenol werden nach Zugabe von 25 Teilen eines stark saren Ionenaustauschers bei Überlagerung von Stickstoffgas 36 Stunden bei 160 bis 165°C unter Rückfluß erhitzt und entsprechend Herstellungsbeispiel 6a) aufgearbeitet. Die Harzsäure-Phenol-Verbindung enthält noch 3,15 % freies Phenol.

b) Herstellung des Harz-Phenol-Oxethylates:
360 Teile des unter a) beschriebenen modifizierten Harzes werden nach Zugabe von 1,5 Teilen Natriumhydroxyd in einem Druckgefäß unter Rühren und Zuführen von 792 Teilen Ethylenoxid bei 150 bis 170°C unter Aufrechterhaltung eines Druckes zwischen 1,5 und 2,5 bar oxethyliert. Nachdem des ganze Ethylenoxid aufgedrückt ist, wird 1 Stunde bei 150 bis 160°C weitergerührt. Das erhaltene Harz-Oxalkylat enthält im Mittel 18 Ethylenoxy-Einheiten pro Molekül.

c) Herstellung des Harzaminkondensats:
500 Teile Harzphenol-Oxethylat aus b) werden entsprechend Herstellungsbeispiel 13b) in Gegenwart von 20 Teilen Aktivkohle innerhalb von 60 Minuten mit 153 Teilen Thionylchlorid versetzt und 4 Stunden bei 85 bis 90°C unter Durchleiten von Stickstoff gerührt. Nach entsprechender Aufarbeitung werden bei gleicher Innentemperatur 153 Teile 1,2-Diaminoethan eingetragen und weitere 4 Stunden gerührt, wobei ein pH-Wert von 7,5 bis 8,5 erreicht wird. Das erhaltene Aminkondensat ist braunfarbig und von wachsartiger Konsistenz. Es besitzt eine Aminzahl zwischen 170 bis 176.

**Herstellungsbeispiel 15:**

a) Herstellung des Harzsäure-Oxethylats:
302 Teile Kolophonium werden entsprechend Herstellungsbeispiel 1a) nach Zugabe von 0,5 Teilen pulverförmigen Ätznatron mit 1320 Teilen Ethylenoxy umgesetzt. Das Produkt enthält im Mittel 30 Ethylenoxy-Einheiten pro Molekül.

b) Herstellung des Aminkondensats:
500 Teile Oxalkylat a) werden analog Herstellungsbeispiel 4b) mit 236 Teilen Thionylchlorid umgesetzt. Anschließend werden bei 80 bis 90 °C 113 Teile N,N-Bis-(3-aminopropyl)-talgfettamin unter Rühren zugegeben. Anschließend läßt man noch 4 Stunden rühren, wobei ein pH-Wert von 7,5 bis 8 erreicht wird. Das erhaltene Aminkondensat besitzt eine Aminzahl zwischen 60 bis 66.

**Herstellungsbeispiel 16:**

a) Herstellung des Harzamin-Oxethylats:
287 Teile eines Harzamins (Amine D der Firma Hercules, USA) werden analog Herstellungsbeispiel 9a) mit 1360 Teilen Ethylenoxid oxethyliert. Anschließend werden bei 120 bis 140 °C und einem Druck von 2 bis 4 bar 282 Teile Propylenoxid zugeführt und eine weitere Stunde bei gleicher Temperatur gerührt. Man erhält ein hellgelbes wachsfestes Harzamin-Oxethylat, das im Mittel 30 Ethylenoxy-Einheiten und 4 Propylenoxy-Einheiten pro Molekül enthält.
b) Herstellung des Aminkondensats:
500 Teile Oxalkylat a) werden analog Herstellungsbeispiel 4b) mit 306 Teilen Thionylchlorid umgesetzt. Anschließend werden bei 80 bis 90 °C 71,0 Teile Talgfettamin und 19,7 Teile 1,3-Diaminopropan innerhalb von 2 Stunden zugegeben. Nach 4 Stunden Rühren bei gleicher Temperatur zeigt eine pH-Wert-Probe 7,5 bis 8. Das erhaltene Produkt ist ein gelbfarbiges, wachsfestes Aminkondensat 30 mit einer Aminzahl zwischen 90 und 100.

**Anwendungsbeispiel**

60,2 Teile 1-Acetoacetylamino-2,4-dimethylbenzol und 6,1 Teile 1-Acetoacetylamino-2,5-dimethoxy-4-chlorbenzol werden in 900 Teilen Wasser und 31 Volumteilen 33 %iger Natronlauge gelöst und nach Zusatz von 1,5 Teilen eines Fettalkoholpolyglykolethers mit Hilfe von 22 Volumteilen Essigsäure gefällt. Nach Zugabe von 7,5 Teilen des Produkts aus Herstellungsbeispiel 9b) kuppelt man mit einer Lösung von tetrazotiertem 4,4′-Diamino-3,3′-dichlordiphenyl, wobei die Tetrazoniumsalzlösung durch Zugabe von 60 Volumteilen wässriger 5 n Natriumnitritlösung zu einem Gemisch aus 38 Teilen 4,4′-Diamino-3,3′-dichlordiphenyl, 183 Volumteilen 5n Salzsäure und 520 Teilen Wasser hergestellt ist. Nach beendeter Kupplung wird die Pigmentsuspension mit 2,5 Teilen eines Harzamins versetzt, alkalisch gestellt, anschließend mit einer Lösung, die 1,8 Teile Dimethylcocosfettaminoxid und 36 Teile eines partiell hydrierten Kolophoniums enthält, versetzt und 30 Minuten bei 98 °C erhitzt. Danach stellt man mit Salzsäure auf pH 4 und erhitzt weitere 30 Minuten bei 98 °C. Anschließend wird filtriert, gewaschen und getrocknet. Man erhält eine Pigmentpräparation, die beim Einarbeiten in einen Druckfarbenfirnis für den Buch- und Offsetdruck eine Druckfarbe mit sehr guten anwendungstechnischen Eigenschaften ergibt. Die Druckfarbe zeichnet sich im Vergleich zu einer Druckfarbe, die ohne den Zusatz des Produkts aus dem Herstellungsbeispiel 9b) hergestellt worden ist, durch ein verbessertes Fließverhalten aus.

**Anwendungsbeispiel 2**

Ersetzt man das in Anwendungsbeispiel 1 verwendete Produkt aus Herstellungsbeispiel 9b) durch das Produkt aus Herstellungsbeispiel 3c), so erhält man eine Pigmentpräparation mit ähnlich guten Eigenschaften wie im Anwendungsbeispiel 1 beschrieben.

**Anwendungsbeispiel 3**

32,3 Teile 1-Acetoacetylamino-2,4-dimethylbenzol und 30,1 Gew.-Teile 1-Acetoacetylamino-2-methylbenzol werden in 750 Teilen Wasser und 31 Volumteilen 33 %iger Natronlauge gelöst und nach Zusatz von 1,5 Teilen eines Fettaalkoholpolyglykolethers mit 22 Volumteilen Essigsäure gefällt. Nach Zugabe von 7,5 Teilen des Produkts aus Herstellungsbeispiel 9b) kuppelt man mit einer Lösung aus 38 Teilen tetrazotiertem 4,4′-Diamino-3,3′-dichlordiphenyl, die analog Anwendungsbeispiel 1 hergestellt ist. Anschließend wird die Pigmentsuspension alkalisch gestellt, mit einer Lösung aus 28 Teilen eines Balsamharzes versetzt und 1 Stunde bei 98 °C erhitzt. Danach stellt man mit Salzsäure auf pH 4 und erhitzt eine weitere Stunde bei

98° C. Danach wird filtriert, gewaschen und getrocknet. Eine analog den Anwendungsbeispielen 1 und 2 hergestellte Druckfarbe weist vergleichbar gute drucktechnische Eigenschaften auf, insbesondere ein verbessertes Fließverhalten im Vergleich zu einer Druckfarbe, die ohne den Zusatz der Verbindung aus Herstellungsbeispiel 9b) hergestellt worden ist.

**Anwendungsbeispiel 4**

Ersetzt man das in Anwendungsbeispiel 3 verwendete Produkt aus Herstellungsbeispiel 9b) durch das Produkt aus Herstellungsbeispiel 12b), so erhält man eine Pigmentpräparation mit ähnlich guten Eigenschaften wie im Anwendungsbeispiel 3 beschrieben.

**Anwendungsbeispiel 5**

Ersetzt man das in Anwendungsbeispiel 3 verwendete Produkt aus Herstellungsbeispiel 9b) durch das Produkt aus Herstellungsbeispiel 10b) so erhält man eine Pigmentpräparation mit ähnlich guten Eigenschaften wie im Anwendungsbeispiel 3 beschrieben.

**Ansprüche**

1. Verbindung der allgemeinen Formel (I)

$A-[(X-O)_n-Y-Z]_m$ (I)

in der
A für einen Rest eines unmodifizierten oder modifizierten natürlichen Harzes oder dessen Veresterungsprodukts mit einem mehrwertigen Alkohol steht,
X für eine Gruppe der Formel $-CH_2CH_2-$, $-CH_2-CH(CH_3)-$ oder $-CH(CH_3)-CH_2-$,
Y für eine Gruppe der Formel $-CH_2CH_2-$, $-CH_2CH(CH_3)-$, $-CH(CH_3)-CH_2-$ oder $-CH_2CH(OH)CH_2-$,
Z für einen Rest der Formel -OH oder der Formel (Ia)

$$(-NH-Q)_a-\overset{\displaystyle R}{\overset{|}{N}}-(Q-NH-)_bH \qquad (Ia)$$

in der
R ein Wasserstoffatom, einen Alkylrest mit 1 bis 24 C-Atomen, einen Rest der Formel $(-CH_2CH_2O)_p-H$, worin p eine ganze Zahl von 1 bis 100 ist, oder einen Rest der Formel $(-Q-NH)_c-H$, Q eine geradkettige oder verzweigte Alkylengruppe mit 1 bis 24 C-Atomen, die auch durch ein oder mehrere nicht direkt nebeneinander stehende Sauerstoffatome unterbrochen sein kann, a eine ganze Zahl von 0 bis 5, b eine ganze Zahl von 0 bis 5 und c eine ganze Zahl von 0 bis 5 bedeutet, wobei mindestens ein Rest Z von - OH verschieden ist,
n für eine ganze Zahl von 0 bis 150 und
m für eine ganze Zahl von 1 bis 5 steht,
wobei für den Fall, daß in Formel (I) und Formel (Ia) mehrere Gruppen oder Reste X, Y, Z, R oder Q enthalten sind, die jeweiligen Gruppen oder Reste gleiche oder verschiedene Bedeutungen haben können.

2. Verbindung nach Anspruch 1, dadurch gekennzeichnet, daß in dem Rest Z der Formel (Ia)
R ein Wasserstoffatom oder einen Alkylrest mit 1 bis 18 C-Atomen oder einen Rest der Formel $(-CH_2CH_2O)_p-H$, worin p eine Zahl von 1 bis 20 ist, und
Q eine geradkettige oder verzweigte Alkylengruppe mit 2 bis 20 C-Atomen bedeutet.

3. Verbindung nach Anspruch 1 oder 2, dadurch gekennzeichnet, daß in dem Rest Z der Formel (Ia)
R ein Wasserstoffatom oder die Gruppe der Formel $-CH_2CH_2-OH$ und
Q eine Alkylengruppe der Formel $-CH_2CH_2-$, $-CH_2CH_2CH_2-$oder $-CH_2CH(CH_3)-CH_2-$bedeutet.

4. Verbindung nach einem oder mehreren der Ansprüche 1 bis 3, dadurch gekennzeichnet, daß A einen Rest einer natürlichen Harzsäure, einer hydrierten oder disproportionierten Harzsäure, eines Harzamins, eines Harzalkohols, einer mit Aryl- oder Arylalkylgruppen modifizierten Harzsäure oder eines Veresterungsprodukts, das durch Veresterung eines der vorstehend genannten Harzsäuren mit einem 2- bis 6-wertigen Alkohol unter Beibehaltung von freien Hydroxygruppen erhalten wird, bedeutet.

5. Verbindung nach einem mehreren der Ansprüche 1 bis 4, dadurch gekennzeichnet, daß in Formel (I) n für eine ganze Zahl von 5 bis 30 und m für die ganze Zahl 1 oder 2 steht.

6. Verfahren zur Herstellung der nach Anspruch 1 definierten Verbindung, dadurch gekennzeichnet, daß man ein natürliches oder modifiziertes Harz und/oder dessen Veresterungsprodukt mit einem mehrwertigen Alkohol, wobei das Veresterungsprodukt noch mindestens eine freie Hydroxygruppe besitzt, mit Ethylenoxid oder Propylenoxid oder beiden Epoxiden hintereinander oder einem Gemisch beider Epoxide oxalkyliert, anschließend das Oxalkylat an den endständigen Hydroxygruppen mit Epichlorhydrin oder Thionylchlorid umsetzt und die jeweils erhaltene Halogenverbindung mit einem oder mehreren Aminen der Formel Z-H umsetzt, wobei Z ein Rest der in Anspruch 1 definierten Formel (Ia) bedeutet.

7. Verfahren nach Anspruch 6, dadurch gekennzeichnet, daß als unmodifiziertes und modifiziertes natürliches Harz und dessen Veresterungsprodukt mit einem mehrwertigen Alkohol mindestens eine der folgenden Verbindungen verwendet wird: natürliche, disproportionierte oder hydrierte Harzsäuren, Harzalkohole, Harzamine, Harzsäuren, die mit halogenabspaltenden Cycloalkyl-, Aralkyl- oder Arylverbindungen modifiziert sind, und Veresterungsprodukte der vorstehend aufgeführten Harzsäuren, die man durch Veresterung mit einem 2- bis 6-wertigen Alkohol enthält, wobei im Veresterungsprodukt noch freie Hydroxygruppen enthalten sind.

8. Verfahren nach Anspruch 6 oder 7, dadurch gekennzeichnet, daß in dem Amin der oben definierten Formel Z-H R ein Wasserstoffatom, Q eine geradkettige Alkylgruppe mit 2 bis 20 C-Atomen, a eine ganze Zahl von 1 bis 5 und b die Zahl 0 bedeutet.

9. Verwendung einer nach einem oder mehreren der Ansprüche 1 bis 5 definierten Verbindung als grenzflächenaktives Mittel.

10. Verwendung nach Anspruch 9, dadurch gekennzeichnet, daß die Verbindung als Kupplungshilfsmittel bei der Herstellung von Azofarbmitteln, als Dispergiermittel oder als Präparationsmittel für Pigmentpräparationen eingesetzt wird.

**Patentansprüche für den folgenden Vertragstaat: ES**

1. Verfahren zur Herstellung einer Verbindung der allgemeinen Formel (I)

$$A\text{-}[(X\text{-}O)_n\text{-}Y\text{-}Z]_m \quad (I)$$

in der
A für einen Rest eines unmodifizierten oder modifizierten natürlichen Harzes oder dessen Veresterungsprodukts mit einem mehrwertigen Alkohol steht,
X für eine Gruppe der Formel $-CH_2CH_2-$, $-CH_2-CH(CH_3)-$ oder $-CH(CH_3)-CH_2-$,
Y für eine Gruppe der Formel $-CH_2CH_2-$, $-CH_2CH(CH_3)-$, $-CH(CH_3)-CH_2-$ oder $-CH_2CH(OH)CH_2-$,
Z für einen Rest der Formel -OH oder der Formel (Ia)

$$(\text{-NH-Q})_a\text{-}\underset{\displaystyle |}{\overset{\displaystyle R}{N}}\text{-}(\text{Q-NH-})_b\text{H} \qquad (Ia)$$

in der
R ein Wasserstoffatom, einen Alkylrest mit 1 bis 24 C-Atomen, einen Rest der Formel $(-CH_2CH_2O)_p-H$, worin p eine ganze Zahl von 1 bis 100 ist, oder einen Rest der Formel $(-Q-NH)_c-H$, Q eine geradkettige oder verzweigte Alkylengruppe mit 1 bis 24 C-Atomen, die auch durch ein oder mehrere nicht direkt nebeneinander stehende Sauerstoffatome unterbrochen sein kann, a eine ganze Zahl von 0 bis 5, b eine ganze Zahl von 0 bis 5 und c eine ganze Zahl von 0 bis 5 bedeutet, wobei mindestens ein Rest Z von -OH veschieden ist,
n für eine ganze Zahl von 0 bis 150 und
m für eine ganze Zahl von 1 bis 5 steht,

wobei für den Fall, daß in Formel (I) und Formel (Ia) mehrere Gruppen oder Reste X, Y, Z, R oder Q enthalten sind, die jeweiligen Gruppen oder Reste gleiche oder verschiedene Bedeutungen haben können, dadurch dadurch gekennzeichnet, daß man ein natürliches oder modifiziertes Harz und/oder dessen Veresterungsprodukt mit einem mehrewertigen Alkohol, wobei das Veresterungsprodukt noch freie Hydroxygruppen besitzt, mit Ethylenoxid oder Propylenoxid oder beiden Epoxiden hintereinander oder einem Gemisch beider Epoxide oxalkyliert, anschließend endständige Hydroxygruppen in reaktionsfähige Abgangsgruppen überführt und die erhaltene Verbindung mit einem oder mehreren Aminen der Formel Z-H umsetzt, wobei

Z ein Rest der oben definierten Formel (Ia) bedeutet.

2. Verfahren nach Anspruch 1, dadurch gekennzeichnet, daß in dem Rest Z der Formel (Ia)
R ein Wasserstoffatom oder einen Alkylrest mit 1 bis 18 C-Atomen oder einen Rest der Formel $(-CH_2CH_2O)_p-H$, worin p eine Zahl von 1 bis 20 ist, und
Q eine geradkettige oder verzweigte Alkylengruppe mit 2 bis 20 C-Atomen bedeutet.

3. Verfahren nach Anspruch 1 oder 2, dadurch gekennzeichnet, daß in dem Rest Z der Formel (Ia)
R ein Wassrstoffatom oder die Gruppe der Formel $-CH_2CH_2-OH$ und
Q eine Alkylengruppe der Formel $-CH_2CH_2-$, $-CH_2CH_2CH_2-$oder $-CH_2CH(CH_3)-CH_2-$bedeutet.

4. Verfahren nach einem oder mehreren der Ansprüche 1 bis 3, dadurch gekennzeichnet, daß
A einen Rest einer natürlichen Harzsäure, einer hydrierten oder disproportionierten Harzsäure, eines Harzamins, eines Harzalkohols, einer mit Aryl- oder Arylalkylgruppen modifizierten Harzsäure oder eines Veresterungsprodukts, das durch Veresterung eines der vorstehend genannten Harzsäuren mit einem 2- bis 6-wertigen Alkohol unter Beibehaltung von freien Hydroxygruppen erhalten wird, bedeutet.

5. Verfahren nach einem oder mehreren der Ansprüche 1 bis 4, dadurch gekennzeichnet, daß in Formel (I)
n für eine ganze Zahl von 5 bis 30 und
m für die ganze Zahl 1 oder 2 steht.

6. Verfahren nach einem oder mehreren der Ansprüche 1 bis 5, dadurch gekennzeichnet, daß in dem Amin der oben definierten Formel Z-H
R ein Wasserstoffatom, Q eine geradkettige Alkylgruppe mit 2 bis 20 C-Atomen, a eine ganze Zahl von 1 bis 5 und b die Zahl O bedeutet.

7. Verfahren nach einem oder mehreren der Ansprüche 1 bis 6, dadurch gekennzeichnet, daß man das Oxalkylat an den endständigen Hydroxygruppen mit Epichlorhydrin oder Thionylchlorid umsetzt und die jeweils erhaltene Halogenverbindung mit einem oder mehreren Aminen der Formel Z-H umsetzt.

8. Verfahren nach einem oder mehreren der Ansprüche 1 bis 7, dadurch gekennzeichnet, daß die Umsetzung mit dem Amin der Formel Z-H bei 20 bis 130 °C, vorzugsweise 40 bis 90 °C erfolgt.

9. Verwendung einer nach einem oder mehreren der Ansprüche 1 bis 5 definierten Verbindung als grenzflächenaktive Mittel.

10. Verwendung nach Anspruch 9, dadurch gekennzeichnet, daß die Verbindung als Kupplungshilfsmittel bei der Herstellung von Azofarbmitteln, als Dispergiermittel oder als Präparationsmittel für Pigmentpräparationen eingesetzt wird.